# EUROPÄISCHE PATENTSCHRIFT

(11) **EP 1 346 889 B1**
(45) Veröffentlichungstag und Bekanntmachung des Hinweises auf die Patenterteilung: **13.05.2009**
(21) Anmeldenummer: 02024777.1
(22) Anmeldetag: 07.11.2002
(51) Int. Cl.: G01N 21/45, B60S 1/08

(54) **Regensensor, insbesondere für Scheiben**
Rain sensor, in particular for windscreens
Capteur de pluie, en particulier pour vitres

(30) Priorität: 20.03.2002 DE 10212269
(43) Veröffentlichungstag der Anmeldung: 24.09.2003
(73) Patentinhaber: ROBERT BOSCH GMBH, 70442 Stuttgart (DE)
(72) Erfinder: Pientka, Rainer, 77871 Renchen (DE); Wolf, Frank, 77815 Buehl (DE); Mounawar, Mounaime, 67100 Strasbourg (FR)

(56) Entgegenhaltungen:
- EP-A- 0 444 520
- EP-A- 0 999 104
- WO-A-01/05637
- WO-A-99/47396
- WO-A-99/52749
- WO-A-99/52752
- DE-C- 19 713 909
- US-A- 5 498 866

## Beschreibung

### Stand der Technik

Die Erfindung betrifft einen Regensensor, insbesondere für Scheiben, nach Gattung des unabhängigen Anspruchs.

Es ist schon ein Regensensor aus der DE 198 15 746 bekannt, der auf einer Kraftfahrzeugscheibe befestigt ist und mehrere Messstrecken aufweist, die teilweise innerhalb der Scheibe verlaufen. Typischerweise ist ein solcher Sensor auf der Innenseite des Kraftfahrzeugs auf der Windschutzscheibe befestigt, wobei Strahlung von einem im Sensorgehäuse angeordneten Sender in die Scheibe hinein gesendet wird. An der Glas-Luft-Grenzfläche an der Außenseite der Windschutzscheibe wird die Strahlung bei trockener Scheibe total reflektiert und in Richtung eines, ebenfalls im Gehäuse des Regensensors angeordneten, Empfängers geleitet. Zur Lenkung der Strahlung sind auf der Scheibe Lichtleitkörper angeordnet.

Aus der US-A-5 498 866 ist eine Regensensorvorrichtung bekannt, bei der neben dem Empfänger für das Sensorsignal ein weiterer Empfänger derart angeordnet ist, dass er ein Korrektursignal zur Korrektur des Signals des Empfängers liefert, wenn in der Scheibe eine Reflektionsfolie angeordnet ist oder Fertigungstolleranzen der Scheibendicke ausgeglichen werden sollen.

Aufgrund der Signaländerung des vom Empfänger abgegebenen Signals kann auf eine Änderung des Totalreflexionswinkels und damit auf eine Verschmutzung oder Benetzung der Außenseite der Scheibe geschlossen werden.

Sender, Empfänger und Lichtleitkörper sind dabei derart angeordnet oder ausgebildet, dass bei trockener Scheibe, also bei Totalreflexion, das maximale beziehungsweise minimale Signal vom Empfänger detektiert wird. Da die Scheiben von Kraftfahrzeugen je nach Typus des Fahrzeugs unterschiedliche Dicke aufweisen, sind für unterschiedliche Fahrzeugtypen unterschiedliche Sensoranordnungen notwendig.

Aus der EP-A-0 999 104 ist ein Regensensor bekannt, der fokussierende Elemente aufweist, wobei die Elemente derart ausgerichtet sind, dass die Abstände zwischen jeweils einem Sender und einem dazugehörigen Empfänger unterschiedlich sind, sodass auf einer mehrschichtigen Scheibe auf beiden Seiten der Scheibenoberfläche die Feuchtigkeit detektiert werden kann.

### Vorteile der Erfindung

Der erfindungsgemäße Regensensor mit den Merkmalen des Hauptanspruchs hat den Vorteil, dass er durch die Optimierung auf verschiedene Scheibendicken auf Scheiben verschiedenster Dicke aufgebracht werden kann ohne die Signalqualität und damit die Funktionalität zu beinträchtigen. Auf diese Weise ist der Sensor in wesentlich größeren Stückzahlen fertigbar, wodurch die Kosten des einzelnen Sensors reduziert werden. Darüber hinaus wird die Logistik bei der Serienfertigung vereinfacht.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn im Verlauf mindestens einer Messstrecke die Strahlung durch ein fokussierendes Element geführt ist, um ein optimales Messsignal und damit ein optimales Ansprechverhalten für eine Scheibenwischanlage zu erzielen.

Weiterhin vorteilhaft ist es, wenn im Verlaufe einer Messstrecke ein Lichtleitkörper vorgesehen ist, der eine zylinderartige Erhebung aufweist, die an mindestens einer ihrer Grundflächen das fokussierende Element trägt.

Besonders vorteilhaft ist es dabei, wenn der Lichtleitkörper, die Erhebung und das fokussierende Element einstückig ausgebildet sind. So können geometrische Toleranzen minimiert werden und der Lichtleitkörper in einem Arbeitsgang, beispielsweise aus Kunststoff, gespritzt werden.

Insbesondere ist vorteilhaft, wenn im Verlauf einer Meßstrecke die Strahlung durch ein holographisches Element geführt ist, da diese besonders flach ausgebildet sind, und für den Regensensor auf diese Weise besonders kleine Abmessungen erzielt werden können.

Weiterhin ist vorteilhaft, wenn die Meßstrecke durch mindestens einen Sender, der Strahlung in die Scheibe zu senden vermag, und mindestens einen Empfänger, der die Strahlung des Senders aus der Scheibe auf der selben Scheibenseite zu detektieren vermag, gebildet wird. Derartige optische Meßstrecken haben sich in der Praxis bewährt, sind wenig störanfällig und kostengünstig in der Herstellung.

Dabei ist es besonders vorteilhaft, wenn die detektierte Strahlung des Senders auf der dem Sender gegenüberliegenden Oberfläche der Scheibe mindestens einer Totalreflexion unterworfen ist.

Besonders vorteilhaft ist es, wenn ein Sender oder ein Empfänger in einem Berührungspunkt mehrerer Meßstrecken angeordnet ist, da auf diese Weise die Anzahl der optischen Bauelemente, die relativ teuer sind, reduziert werden kann, ohne eine Einbuße im Meßsignal hinnehmen zu müssen.

Weiterhin ist es als Vorteil anzusehen, wenn die Meßstrecken im Wesentlichen parallel zueinander angeordnet sind, da auf diese Weise Fremdlichteinflüsse minimiert werden.

Besonders vorteilhaft ist es, wenn vier Meßstrecken vorgesehen sind, die die Grundfläche eines Viereckes einschließen, da auf diese Weise mittels zweier Sender und zweier Empfänger vier Meßstrecken realisiert sind. Darüber hinaus können diese vier Meßstrecken auf sehr engem Raum untergebracht werden.

Als weiterer Vorteil ist die Ausbildung der Sender und Empfänger als Halbleiterbauelemente in SMD-Technik zu sehen, da dadurch der Bauraumbedarf des Regensensors minimiert wird.

Besonders vorteilhaft ist es, wenn in Einbaulage die Schaltungsplatine im Wesentlichen parallel zur Scheibe angeordnet ist, da diese dann die Sender und Empfänger direkt tragen kann und die Schaltungsplatine auf diese Weise dicht an der Oberfläche der Scheibe entlang geführt werden kann.

Weiterhin ist es als Vorteil anzusehen, wenn ein schalenartiges Gehäuse vorgesehen ist, welches von einem Lichtleitkörper abgeschlossen ist, da auf diese Weise der Sensor als kompakte Baueinheit in der Serienfertigung am Bandende auf die Scheibe aufgeklebt werden kann.

Besonders vorteilhaft ist es, wenn im Regensensor ein Mittel zur Erkennung der Umgebungshelligkeit vorgesehen ist. Einerseits können mit diesen Mitteln die Beleuchtungseinrichtungen des Kraftfahrzeugs gesteuert werden, andererseits können Rückschlüsse auf Fremdlicht, welches auf die Empfänger einstrahlt, geschlossen werden und die Empfängersignale dementsprechend korrigiert werden.

Besonders vorteilhaft ist es weiterhin, wenn das Mittel zur Erkennung der Umgebungshelligkeit die Helligkeit aus verschiedenen Winkelbereichen detektiert, um eine besonders komfortable und fahreradaptierte Steuerungsfunktion zu gewährleisten.

### Zeichnungen

In den nachfolgenden Zeichnungen sind mehrere Ausführungsbeispiele der Erfindung dargestellt und in der nachfolgenden Beschreibung näher erläutert.

Es zeigen:
Figur 1 einen Querschnitt durch einen erfindungsgemäßen Regensensor,
Figur 2 eine Prinzipskizze eines Regensensors aus dem Stand der Technik,
Figur 3 ein Beispiel für eine Meßstreckenanordnung eines Regensensors, aus dem Stand der Technik,
Figur 3a ein Beispiel für eine Meßstreckenanordnung eines erfindungsgemäßen Regensensors,
Figur 4 eine Variation zur in Figur 3 gezeigten Meßstreckenanordnung,
Figur 5 einen Lichtleitkörper eines erfindungsgemäßen Regensensors nach Figur 4,
Figur 6 eine Meßstreckenanordnung eines erfindungsgemäßen Regensensors in einer weiteren Variation,
Figur 7 den Lichtleitkörper eines Regensensors nach Figur 6 und
Figur 8 eine weitere Variation der Meßstreckenanordnung eines Regensensors.

### Beschreibung der Ausführungsbeispiele

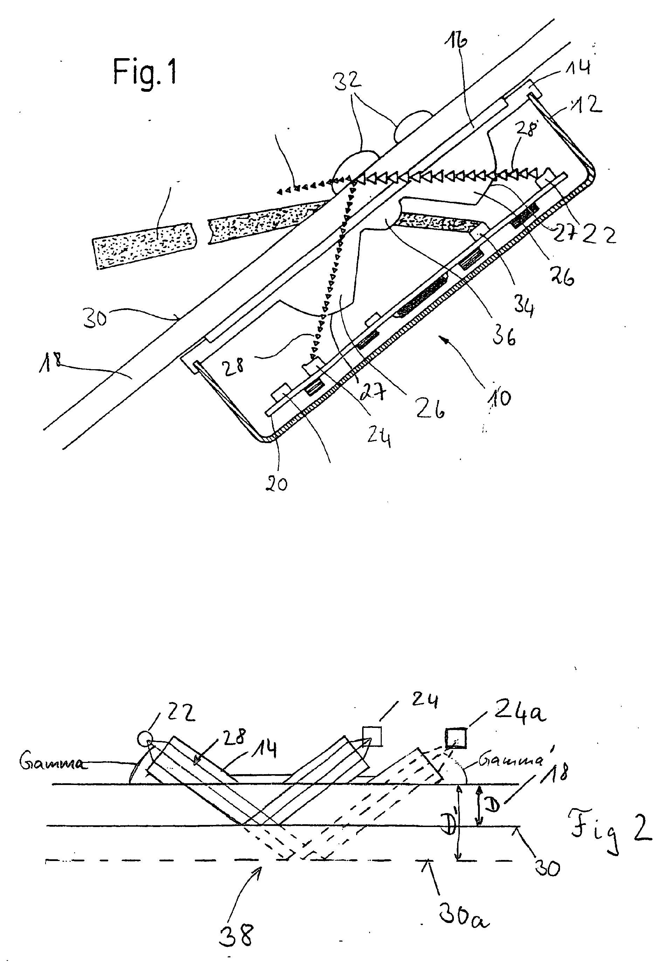

Figur 1 zeigt einen erfindungsgemäßen Regensensor 10 in einer schematischen Schnittdarstellung. Dieser Regensensor 10 umfaßt im Wesentlichen ein schalenförmiges Gehäuse 12, welches aus Kunststoff ausgebildet ist und von einem Lichtleitkörper 14, der aus Kunststoff - vorzugsweise aus geeignet eingefärbtem PMMA - ausgebildet ist, verschlossen ist. Der Lichtleitkörper 14 ist mittels eines Koppelkissens 16, welches beidseitig selbstklebend als Silikonkissen ausgebildet ist, auf einer Scheibe 18 befestigt. Sinnvollerweise ist der Regensensor 10 auf der Windschutzscheibe eines Kraftfahrzeuges in dem Bereich, der von den Scheibenwischern überstrichen wird, angeordnet.

Im Innern des Gehäuses 12 ist die Schaltungsplatine 20 befestigt, auf der Sender 22 und Empfänger 24 als Halbleiterbauelemente in SMD-Technik angeordnet sind. Natürlich kann die Schaltungsplatine 20 auch, beispielsweise mittels geeigneter Dome, direkt am Lichtleitkörper 14 befestigt sein.

Der Lichtleitkörper 14 umfaßt im Wesentlichen ein ebenes Teil, aus dem zylinderartige Erhebungen 26 die durch ein linsenartiges fokussierendes Element 27 abgeschlossen sind, herausragen. Selbstverständlich kann als Lichtleitkörper 14 auch eine ebene Hologrammfolie oder ein direkt auf oder in die Scheibe geprägtes oder belichtetes Hologramm als strahlführendes und/oder fokussierendes Element 27 dienen.

Im Betrieb sendet der Sender 22 Strahlung 28 aus, welche durch die fokussierenden Elemente 27 und die zylinderartigen Erhebungen 26 unter einem Einkoppelwinkel Gamma auf eine dem Sender 22 abgewandte Oberfläche 30 der Scheibe 18 gelenkt wird. Sender 22 und Empfänger 24 sowie die fokussierenden Elemente 27 sind dabei derart angeordnet, daß bei einer trockenen Scheibe 18, wenn also die Oberfläche 30 eine Glas-Luft-Grenzfläche bildet, eine Totalreflexion an der Oberfläche 30 stattfindet. Der wesentlichste Anteil der Strahlung 28 wird dann in einem Auskopplungswinkel Gamma' in Richtung des Empfängers 24 reflektiert.

Befinden sich nun Feuchtigkeitstropfen 32 auf der Oberfläche 30, so ändert sich der Totalreflexionswinkel, da das Verhältnis der Brechungsindices von Wasser und Glas ein anderes ist, als das von Luft und Glas. Dadurch wird nur ein Teil der Strahlung 28 an der Oberfläche 30 reflektiert und die vom Empfänger 24 empfangene Strahlung 28 reduziert.

In Figur 1 ist weiterhin ein Detektor 34 gezeigt, der als Mittel zur Erkennung der Umgebungshelligkeit dient und je nach Ausbildung einer Ausformung 36 des Lichtleitkörpers 14, das Umgebungslicht aus verschiedenen Winkelbereichen zu detektieren vermag.

In Figur 2 ist die prinzipielle Funktionsweise eines bekannten Regensensors 10 dargestellt. Der Sender 22 sendet die Strahlung 28 in Richtung der Oberfläche 30. An dieser Oberfläche 30 wird die Strahlung bei trockener Scheibe 18 totalreflektiert und in Richtung des Empfängers 24 geleitet. Ist die Dicke D der Scheibe größer als vorgesehen, beispielsweise D', so gelangt die Strahlung 28 nicht mehr zur gänze zum Empfänger 24, wodurch das Signal am Empfänger 24 reduziert wird. Erfindungsgemäß wird ein weiterer Empfänger 24a derart angeordnet, daß dieser die Strahlung, die an einer weiteren Oberfläche 30a, die einer Scheibe 18 der Dicke D' entspricht, totalreflektiert. In einer Variation können die Empfänger 24 und 24a auch zu einem großen Empfängerelement verbunden sein. Dadurch ergeben sich Meßstrecken 38 unterschiedlicher Länge.

Durch die Anordnung von Sender 22 und Empfänger 24 sowie dem Lichtleitkörper 14 beschreibt die Strahlung 28 eine Meßstrecke 38, im Verlaufe derer die Strahlung 28 bei trockener Scheibe 18 totalreflektiert bzw. bei feuchter Scheibe teilreflektiert wird.

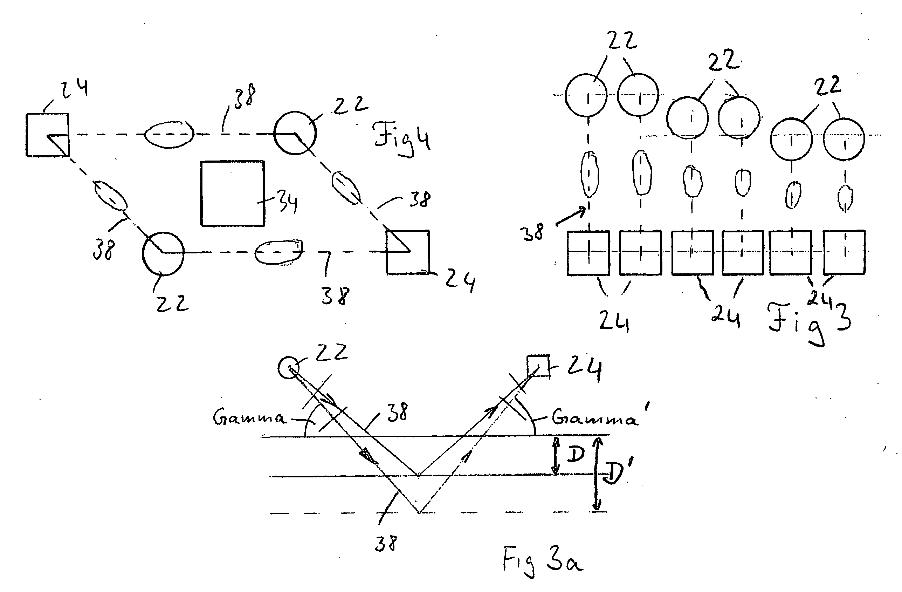

In Figur 3 ist eine Anordnung von Sendern 22 und Empfängern 24 eines bekannten Regensensors 10 gezeigt. Die Eintrittswinkel, mit denen die Strahlung 28 in die Scheibe 18 eintritt, sind hierbei konstant gewählt, so daß der Abstand zwischen dem Sender 22 und seinem korrespondierenden Empfänger 24 jeweils etwas kleiner gewählt sein muß. Hier sind drei Senderpaare 22 und drei Empfängerpaare 24 gezeigt, die jeweils einen unterschiedlichen Abstand voneinander aufweisen. Auf diese Weise wird für verschiedene Dicken D der Scheibe 18 ein optimales Meßergebnis erzielt. Erfindungsgemäß ist es möglich, die Sender 22 und die Empfänger 24 sämtlicher Meßstrecken gleich beabstandet anzuordnen. In diesem Fall sind die fokussierenden Elemente 27 derart ausgerichtet, daß die Eintrittswinkel Gamma der Strahlung 28 in die Scheibe 18 jeweils unterschiedlich sind. Dies ist in Figur 3a dargestellt.

Figur 4 zeigt eine weitere nicht erfindungsgemäße, Anordnungsvariante der Sender 22 und der Empfänger 24. Die Sender 22 und Empfänger 24 sind dabei so angeordnet, daß sie in den Ecken eines Parallelogramms jeweils gegenüberliegend angeordnet sind. Prinzipiell können diese natürlich auch in einer anderen rechteckigen Form angeordnet sein. Entscheidend ist dabei, daß die Abstände zwischen den Sendern 22 mit ihren korrespondierenden Empfängern 24 jeweils unterschiedlich sind, um auf diese Weise für verschiedene Scheibendicken ein optimales Meßergebnis zu erzielen. Im Zentrum des Rechtecks ist der Detektor 34 zur Erkennung der Umgebungshelligkeit angeordnet.

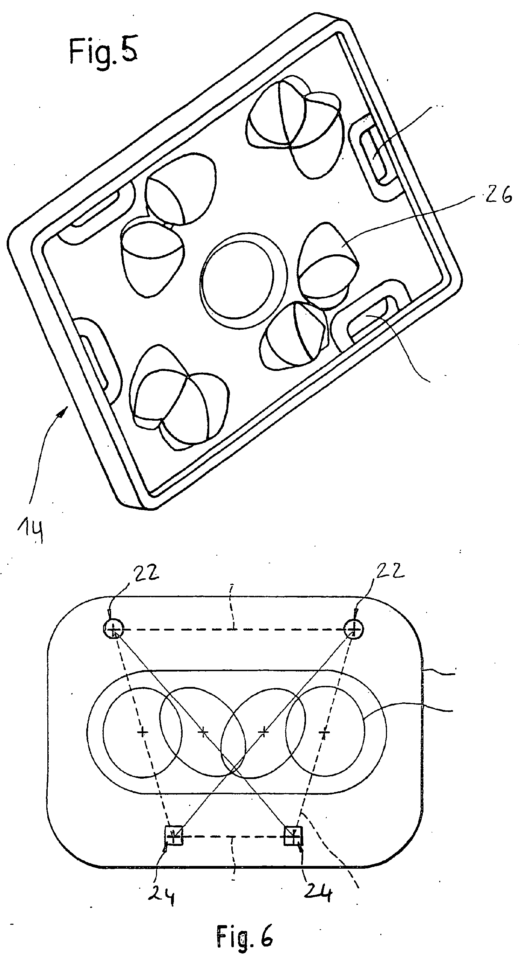

In Figur 5 ist ein Lichtleitkörper korrespondierend zu einer Anordnung aus Figur 4 gezeigt. Hier sind die Erhebungen 26 mit den Elementen 27 (Figur 1) jedoch äquidistant zueinander angeordnet. Die Optimierung für die unterschiedlichen Scheibendicken wird dadurch erzielt, daß die Einfallswinkel der Strahlung 28 entsprechend Figur 3a für die unterschiedlichen Richtungen entsprechend gewählt sind.

In Figur 6 ist eine Variation einer solchen Anordnung dargestellt. Die Sender 22 und die Empfänger 24 schließen die Grundfläche eines Trapezes ein. Da die Sender 22 auf einer Parallelen des Trapezes und die Empfänger 24 auf der anderen Parallelen des Trapezes angeordnet sind, ergeben sich vier Meßstrecken mit zwei unterschiedlichen Längen, so daß bereits ein großer Bereich verschiedener Scheibendicken D abgedeckt werden kann.

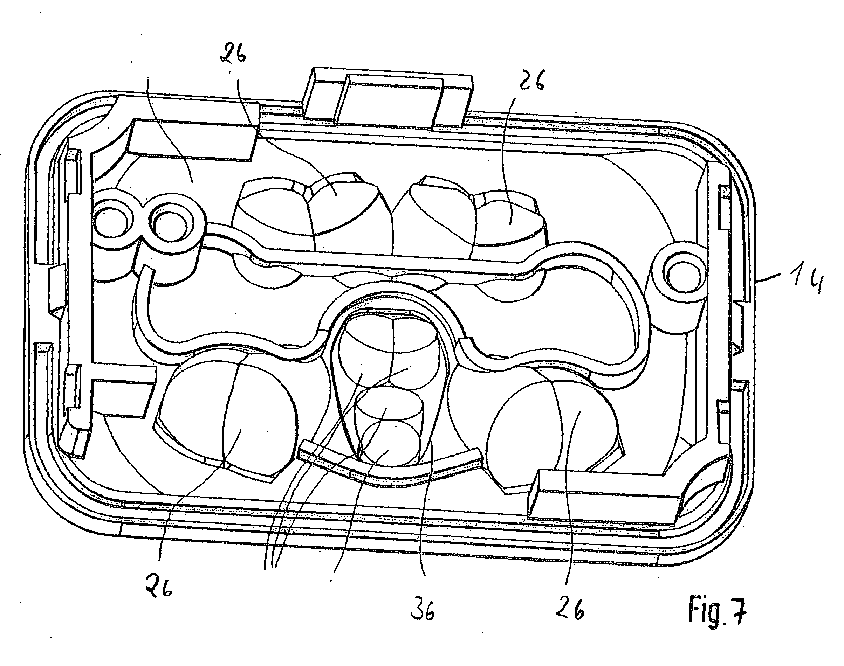

In Figur 7 ist ein Lichtleitkörper 14 für eine derartige Anordnung gezeigt. Die zylindrischen Erhebungen 26 weisen wiederum die Form eines Zylinderschnittes auf, dessen Grundfläche einem linsenartigen Element als fokussierendes Element 27 abgeschlossen ist. Natürlich können äquivalent auch andere Formen als die zylindrische vorgesehen sein. Zwischen den beiden Sendern 22 ist auch die Ausformung 36 für den Detektor 34 dargestellt. Auch hier ist es beispielsweise möglich, durch geeignete Wahl des Einfallswinkels für die Strahlung 28, bzw. durch entsprechende Ausbildung der zylinderartigen Erhebungen 26 insgesamt vier verschiedene Meßstrecken vorzusehen, womit ein noch größerer Scheibendickenbereich abgedeckt werden kann.

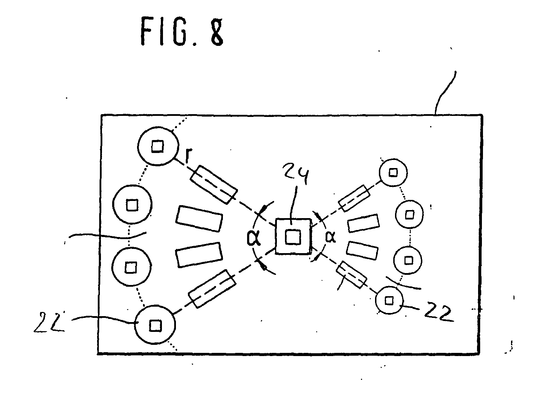

In Figur 8 ist eine weitere Variation der Erfindung dargestellt. Hierbei ist im Zentrum einer kreisförmigen Anordnung von Sendern 22 ein Empfänger 24 angeordnet. Die Sender 22 sind jeweils auf einem Kreisbogen angeordnet, in dessen Zentrum der Empfänger 24 sitzt. Jeweils gegenüberliegend ist ein weiterer Sender 22 vorgesehen, der jedoch einen geringeren Abstand zum Empfänger 24 aufweist. Prinzipiell können jedoch die einzelnen Sender auch spiralförmig angeordnet sein, so daß jeder einen unterschiedlichen Abstand vom Empfänger 24 besitzt.

In einer einfachen Ausführungsform werden die Signale der Empfänger aufaddiert, so daß sich ein einfaches Summensignal ergibt. Prinzipiell ist es jedoch auch möglich, die einzelnen Empfänger mit unterschiedlichen Gewichtungsfaktoren zu versehen oder eine andere geeignete Auswahl zu treffen. So ist es sinnvoll, die Meßstrecken, welche für Scheiben mit einer größeren Dicke D vorgesehen sind, höher zu gewichten, als diejenigen, die für eine dünne Scheibe vorgesehen sind, um im Verlaufe der Meßstrecke auftretende Verluste ausgleichen zu können.

## Patentansprüche

1. Regensensor (10), insbesondere für Scheiben (18) eines Kraftfahrzeugs, mit mehreren, durch die Scheibe (18) verlaufenden Messstrecken (38), wobei im Verlauf mindestens einer Messstrecke (38) die Strahlung durch ein fokussierendes Element (27) geführt ist und ein Lichtleitkörper (14) vorgesehen ist, der insbesondere eine zylinderartige Erhebung (26) aufweist, die an einer ihrer Grundflächen das fokussierende Element (27) trägt, wobei die Messstrecke (38) durch mindestens einen Sender (22), der Strahlung in die Scheibe (18) zu senden vermag und mindestens einem Empfänger (24), der die Strahlung des Senders (22) aus der Scheibe (18) auf der selben Scheibenseite zu detektieren vermag, gegeben ist, und wobei der Empfänger (24) ein Messsignal zur Ansteuerung einer Scheibenwischanlage zu liefern vermag, **dadurch gekennzeichnet, dass** das fokussierende Element (27) derart ausgerichtet ist, dass die Eintrittswinkel der Strahlung (28) in die Scheibe (18) jeweils unterschiedlich sind, so dass die Messstrecken (38) für verschiedene Dicken (D) der Scheibe (18) optimiert sind.

2. Regensensor (10) nach einem der vorhergehenden Ansprüche, **dadurch gekennzeichnet, dass** mehrere Messstrecken (38) mit unterschiedlicher Länge vorgesehen sind.

3. Regensensor (10) nach einem der vorhergehenden Ansprüche, **dadurch gekennzeichnet, dass** Lichtleitkörper (14), Erhebung (26) und fokussierendes Element (27) einstückig ausgebildet sind.

4. Regensensor (10) nach einem der vorhergehenden Ansprüche, **dadurch gekennzeichnet, dass** im Verlauf mindestens einer Messstrecke (38) die Strahlung durch ein holographisches Element geführt ist.

5. Regensensor (10) nach einem der vorhergehenden Ansprüche, **dadurch gekennzeichnet, dass** der Empfänger (24) so angeordnet ist, dass die detektierte Strahlung des Senders (22) auf der dem Sender (22) gegenüberliegenden Oberfläche (30) der Scheibe (18) mindestens einer Totalreflexion unterworfen ist.

6. Regensensor (10) nach Anspruch 5, **dadurch gekennzeichnet, dass** ein Sender (22) oder ein Empfänger (24) in einem Berührungspunkt mehrerer Messstrecken (38) angeordnet ist.

7. Regensensor (10) nach einem der vorhergehenden Ansprüche, **dadurch gekennzeichnet, dass** die Messstrecken (38) im wesentlichen parallel zueinander angeordnet sind.

8. Regensensor (10) nach einem der vorhergehenden Ansprüche, **dadurch gekennzeichnet, dass** vier Messstrecken (38) vorgesehen sind die Grundfläche eines Vierecks einschließen.

9. Regensensor (10) nach einem der vorhergehenden Ansprüche, **dadurch gekennzeichnet, dass** die Sender (22) und die Empfänger (24) als Halbleiterbauelemente in SMD Technik ausgebildet sind.

10. Regensensor (10) nach einem der vorhergehenden Ansprüche, **dadurch gekennzeichnet, dass** ein Mittel zur Erkennung der Umgebungshelligkeit vorgesehen ist.

11. Regensensor (10) nach Anspruch 10, **dadurch gekennzeichnet, dass** das Mittel zur Erkennung der Umgebungshelligkeit die Helligkeit aus verschiedenen Winkelbereichen detektiert.

## Claims

1. Rain sensor (10), in particular for windscreens (18) of a motor vehicle, having a plurality of measuring paths (38) which run through the windscreen (18), the radiation being guided through a focusing element (27) over the course of at least one measuring path (38) and provision being made of a light-guiding body (14) which has, in particular, a cylindrical elevation (26) which has the focusing element (27) on one of its base surfaces, the measuring path (38) being formed by at least one transmitter (22), which is able to transmit radiation into the windscreen (18), and at least one receiver (24) which is able to detect the radiation of the transmitter (22) from the windscreen (18) on the same side of the windscreen, and the receiver (24) being able to provide a measurement signal for driving a windscreen wiper system, **characterized in that** the focusing element (27) is set up in such a manner that the entrance angles of the radiation (28) into the windscreen (18) are each different, with the result that the measuring paths (38) are optimized for different thicknesses (D) of the windscreen (18).

2. Rain sensor (10) according to the preceding claim, **characterized in that** a plurality of measuring paths (38) of different lengths are provided.

3. Rain sensor (10) according to one of the preceding claims, **characterized in that** the light-guiding body (14), the elevation (26) and the focusing element (27) are integrally formed.

4. Rain sensor (10) according to one of the preceding claims, **characterized in that** the radiation is guided through a holographic element over the course of at least one measuring path (38).

5. Rain sensor (10) according to one of the preceding claims, **characterized in that** the receiver (24) is arranged in such a manner that the detected radiation of the transmitter (22) is subjected to at least total internal reflection on that surface (30) of the windscreen (18) which is opposite the transmitter (22).

6. Rain sensor (10) according to Claim 5, **characterized in that** a transmitter (22) or a receiver (24) is arranged at a point of contact of a plurality of measuring paths (38).

7. Rain sensor (10) according to one of the preceding claims, **characterized in that** the measuring paths (38) are arranged essentially parallel to one another.

8. Rain sensor (10) according to one of the preceding claims, **characterized in that** four measuring paths (38) are provided and enclose the base surface of a square.

9. Rain sensor (10) according to one of the preceding claims, **characterized in that** the transmitters (22) and the receivers (24) are designed as semiconductor components using SMD technology.

10. Rain sensor (10) according to one of the preceding claims, **characterized in that** a means for detecting the ambient brightness is provided.

11. Rain sensor (10) according to Claim 10, **characterized in that** the means for detecting the ambient brightness detects the brightness from different angular ranges.

## Revendications

1. Capteur de pluie (10), en particulier pour vitres (18) d'un véhicule automobile, comprenant plusieurs sections de mesure (38) s'étendant à travers la vitre (18), le rayonnement étant guidé sur l'étendue d'au moins une section de mesure (38) à travers un élément de focalisation (27), et un corps de guide de lumière (14) étant prévu, lequel présente en particulier un rehaussement de type cylindrique (26) qui porte sur l'une de ses surfaces de base l'élément de focalisation (27), la section de mesure (38) pouvant envoyer, par le biais d'au moins un émetteur (22), le rayonnement dans la vitre (18), et au moins un récepteur (24), qui permet de détecter le rayonnement de l'émetteur (22) provenant de la vitre (18) du même côté de la vitre, le récepteur (24) permettant de fournir un signal de mesure pour la commande d'une installation de lave-glace, **caractérisé en ce que** l'élément de focalisation (27) est orienté de telle sorte que les angles d'incidence du rayonnement (28) dans la vitre (18) soient à chaque fois différents, de sorte que les sections de mesure (38) soient optimisées pour différentes épaisseurs (D) de la vitre (18).

2. Capteur de pluie (10) selon la revendication précédente, **caractérisé en ce que** plusieurs sections de mesure (38) de différentes longueurs sont prévues.

3. Capteur de pluie (10) selon l'une quelconque des revendications précédentes, **caractérisé en ce que** le corps de guide de lumière (14), le rehaussement (26) et l'élément de focalisation (27) sont réalisés d'une seule pièce.

4. Capteur de pluie (10) selon l'une quelconque des revendications précédentes, **caractérisé en ce que** sur l'étendue d'au moins une section de mesure (38), le rayonnement est guidé à travers un élément holographique.

5. Capteur de pluie (10) selon l'une quelconque des revendications précédentes, **caractérisé en ce que** le récepteur (24) est disposé de telle sorte que le rayonnement détecté du capteur (22) est soumis à au moins une réflexion totale sur la surface (30) de la vitre (18) opposée à l'émetteur (22).

6. Capteur de pluie (10) selon la revendication 5, **caractérisé en ce qu'**un émetteur (22) ou un récepteur (24) est disposé dans un point de contact de plusieurs sections de mesure (38).

7. Capteur de pluie (10) selon l'une quelconque des revendications précédentes, **caractérisé en ce que** les sections de mesure (38) sont disposées essentiellement parallèlement les unes aux autres.

8. Capteur de pluie (10) selon l'une quelconque des revendications précédentes, **caractérisé en ce que** quatre sections de mesure (38) sont prévues, lesquelles incluent la surface de base d'un quadrilatère.

9. Capteur de pluie (10) selon l'une quelconque des revendications précédentes, **caractérisé en ce que** les émetteurs (22) et les récepteurs (24) sont réalisés sous forme d'éléments semi-conducteurs par une technique SMD.

10. Capteur de pluie (10) selon l'une quelconque des revendications précédentes, **caractérisé en ce qu'**un moyen de reconnaissance de la clarté de l'environnement est prévu.

11. Capteur de pluie (10) selon la revendication 10, **caractérisé en ce que** le moyen de reconnaissance de la clarté de l'environnement détecte la clarté depuis différentes plages angulaires.
